Europäisches Patentamt

European Patent Office

Office européen des brevets

(19)

(11) Publication number: **0 162 471**
**A2**

# EUROPEAN PATENT APPLICATION

(21) Application number: **85106389.1**

(22) Date of filing: **23.05.85**

(51) Int. Cl.⁴: **G 02 B 6/02**

(30) Priority: **23.05.84 JP 102727/84**

(43) Date of publication of application:
**27.11.85 Bulletin 85/48**

(84) Designated Contracting States:
**AT BE CH DE FR GB IT LI NL SE**

(71) Applicant: **SUMITOMO ELECTRIC INDUSTRIES LIMITED
No. 15, Kitahama 5-chome Higashi-ku
Osaka-shi Osaka 541(JP)**

(72) Inventor: **Nakasuji, Masaaki c/o Yokohama Works
Sumitomo Electric Industries, Ltd. 1, Taya-cho
Totsuka-ku Yokohama-shi Kanagawa-ken(JP)**

(72) Inventor: **Aoki, Tetsuji c/o Yokohama Works
Sumitomo Electric Industries, Ltd. 1, Taya-cho
Totsuka-ku Yokohama-shi Kanagawa-ken(JP)**

(74) Representative: **Eitle, Werner, Dipl.-Ing. et al,
Hoffmann, Eitle & Partner Patentanwälte Arabellastrasse
4
D-8000 München 81(DE)**

(54) Optical fiber.

(57) An optical fiber having a first covering (2) surrounding the optical fiber (1) and a second covering (3) surrounding the first covering, the first covering comprising a material, the Young's modulus of which at −30°C is not greater than ten times that at 23°C, which has small increase of attenuation of light transmission at a low temperature and also small increase of attenuation of light transmission due to lateral pressure not only at a room temperature but also at a low temperature.

Fig. 1

EP 0 162 471 A2

## OPTICAL FIBER

The present invention relates to an optical fiber for light transmission with a first covering and a second covering.

There is known an optical fiber having a tight structure comprising a first covering of, for example, an ultraviolet-cured resin and a second covering of a thermoplastic resin such as polyamide (e.g. nylon 12). In the tight structure optical fiber, Young's modulus at a room temperature of the first covering material is taken into consideration but not that at a low temperature in evaluating transmission characteristics at a low temperature. Young's modulus of the conventionally used resin of the first covering is usually from 0.1 to 0.2 kg/mm², but it increases to several ten to several hundred kg/mm² at a low temperature of 0 to -30°C. Although the attenuation of light transmission of the tight structure optical fiber is low at a room temperature, it greatly increases at a low temperature due to lateral pressure and/or shrinking deformation of the second covering. Moreover, in a extreme case, because of large increase of Young's modulus of the first covering, unabsorbed lateral pressure makes it impossible to transmit light through the optical fiber at a low temperature.

One object of the present invention is to provide a tight structure optical fiber in which increase of attenuation of light transmission at a low temperature is small.

Another object of the present invention is to provide a tight structure optical fiber having a first covering Young's modulus of which is less temperature dependent.

Further object of the present invention is to provide a tight structure optical fiber which has small increase of attenuation of light transmission due to external force at a low temperature.

The present invention will be explained by making reference to 23°C as a typical room temperature and -30°C as a typical low temperature.

Accordingly, the present invention provides an optical fiber having a first covering surrounding the optical fiber and a second covering surrounding the first covering, the first covering comprising a material Young's modulus at -30°C of which is not greater than ten times of that at 23°C.

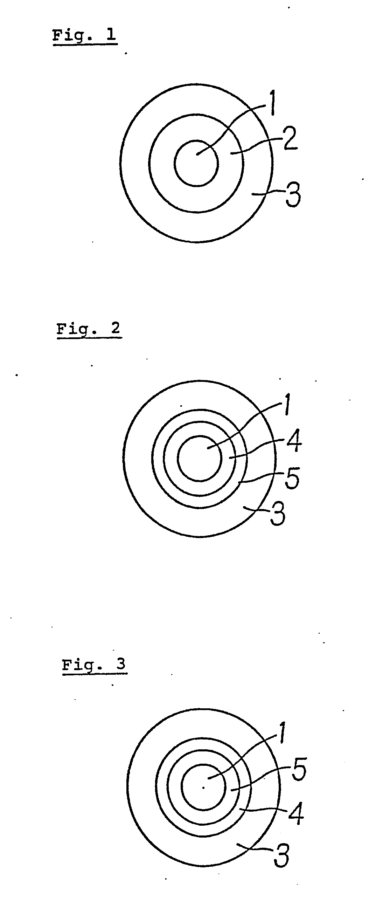

Figs. 1 to 3 are cross sectional views of three embodiments of the optical fiber according to the present invention, and

Figs. 4 and 5 shows temperature dependency of Young's modulus of ultraviolet-cured resins used in Examples as the first covering of the optical fiber according to the present invention.

In the tight buffer structure optical fiber, increase of attenuation of light transmission at a low temperature is mainly caused by longitudinal shrinkage of the second covering, and increase of the attenuation due to lateral pressure is caused by the force applied in a radial direction. In either case, microbends are formed in the optical fiber, which may be due to the fact that deformation which is induced by the shrinkage of the second covering and/or the lateral pressure and transferred to the optical fiber without relaxation.

Therefore, it is found necessary to provide the optical fiber with a covering made of a material which relaxes the deformation even at a low temperature so as to prevent the formation of the microbends and, in turn, to reduce the increase of attenuation of light transmission at a low temperature.

According to this finding, the optical fiber of the invention preferably has the first covering made of a material Young's modulus at -30°C of which is not in excess of ten times that at 23°C. More preferably, when the first covering comprises plural layers, at least one layer has Young's modulus at 23°C of not larger than $0.5 \text{ kg/mm}^2$. Since the first covering having Young's modulus at 23°C of not larger than 0.5 kg/mm² acts as a relaxation layer, the first covering may further comprise a layer made of a material having Young's modulus at 23°C larger than 0.5 kg/mm².

When the first layer comprises two or more layers having the same or different Young's modulus, the layers may be combined in several ways. Particularly, when the relaxation layer is thin, it is preferably made of a material having Young's modulus at -30°C less than 0.5 kg/mm².

On the contrary, when the first covering is made of a material Young's modulus at -30°C of which is in excess of ten times that at 23°C, the tight structure optical fiber shows large attenuation of light transmission at -30°C, for example, of 20 dB/km or more at a wavelength band of 0.85 micrometer. In addition, the lateral pressure greatly increases attenuation of light transmission at -30°C.

The material used to make the first covering of the optical fiber of the invention is preferably an ultraviolet- or electron radiation-cured resin. Specific examples are urethane resins (e.g. polyurethane acrylate, etc.), epoxy resins (e.g. polyepoxy acrylate, etc.), polyesters (e.g. polyester acrylate, etc.), polyethers (e.g. polyether acrylate, etc.), butadiene resins (e.g. polybutadiene acrylate, etc.), silicone resins (e.g. silicone acrylate, etc.) and mixtures thereof.

Specific examples of the resin used to make the second covering are thermoplastic resins such as polyamide resins, polyesters, polyolefin resins (e.g. polyethylene, etc.), vinyl resins (e.g. polyvinyl chloride, etc.) and fluororesins (e.g. ethylene/tetrafluoroethylene copolymer, etc.) as well as ultraviolet- or electron radiation-cured resins having Young's modulus larger than 1,000 kg/cm², and mixtures thereof.

Embodiments of the optical fiber of the present invention will now be described, by way of example, with reference to the accompanying drawings.

In drawings, numeral 1 stands for an optical fiber, numerals 2, 4 and 5 stand for the first covering made of the ultraviolet- or electron radiation-cured resin, and numeral 3 stands for the second covering. Among three kinds of the first covering, the covering 2 and 4 are made of the resin having Young's modulus of 0.1 kg/mm² at 23°C, and the covering 5 is made of the resin having Young's modulus of 30 kg/mm² at 23°C.

The ultraviolet-cured resin and the electron radiation-cured resin have, after cured, substantially the same properties although their curing manner is different. Therefore, in following Examples, the ultraviolet-cured resins were used. In the specification, although only a single core optical fiber is explained, the present invention can be applied to a multi core optical fiber such as a bunch fiber cable and a tape fiber cable in which plural optical fibers are covered by the coverings.

Preferably, thickness of the first covering of the optical fiber is not thicker than 200 micrometers, and that of the second covering is not larger than 400 microns. The first and/or second covering may consists of two or more layers of the same or different resins having substantially the same Young's modulus.

The tight structure optical fiber of the invention may be produced by a per se conventional method. For example, the bare optical fiber is passed through a coating die in which the resin is contained.

In the specification, Young's modulus is defined as 2.5 % secant modulus measured according to JIS (Japanese Industrial Standards) K 7113 by stretching a No. 2 dumbbell made of the resin at a rate of 1 mm/min. with a chuck distance of 25 mm.

The present invention will be hereinafter explained further in detail by following Examples.

0162471

Example 1

Around a GI type optical fiber of 50 micrometers in core diameter and 125 micrometers in fiber diameter having  n of 1 %, an ultraviolet-cured resin A, B or C was coated as the first covering and Nylon 12 as the second covering to produce an optical fiber having two coverings. The radius of the first covering was 400 microns and that of the second covering was 0.9 mm.

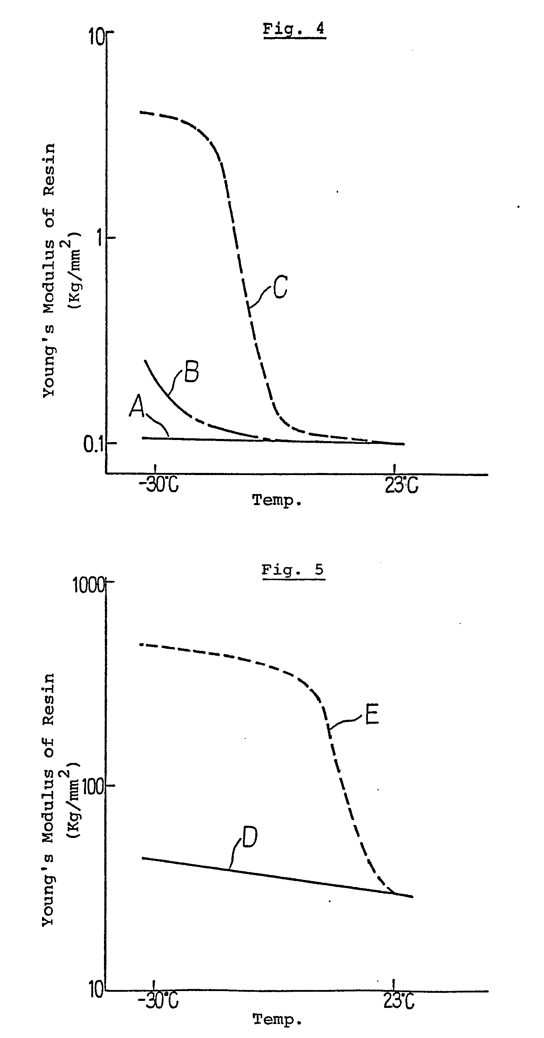

The temperature dependency of Young's modulus of the ultraviolet-cured resins is shown in Fig. 4.  While Young's modulus of the resins A, B or C was about 0.1 kg/mm$^2$, that of the resin C at -30°C was in excess of ten times that at a temperature of 23°C or lower.

With the covered optical fibers, measured was attenuation of light transmission at a wavelength of 0.85 micrometer under a coiled condition without anyl lateral force or a condition wherein lateral pressure was applied on the covered fiber.  The lateral pressure was applied by sandwiching the optical fiber with two sheets of #60 sand-paper with load of 30 kg.  The results are shown in Table 1.

- 8 -

0162471

## Table 1

| No. | Resin of 1st covering | Attenuation (dB/km) | | | |
|-----|-----------------------|---------------------|---------|---------|---------|
| | | Under bundled condition | | Under condition with lateral pressure | |
| | | 23°C | -30°C | 23°C | -30°C |
| 1 | A | 2.26 | 2.31 | 2.59 | 2.63 |
| 2 | B | 2.25 | 2.33 | 2.71 | 2.99 |
| 3 | C | 2.27 | 21.4 | 2.66 | Too high to measure |

### Example 2

Around the same GI type optical fiber, two layers of an ultraviolet-cured resin A, C, D or E were coated as the first covering in a combination shown in Table 2 and Nylon 12 as the second covering to produce an optical fiber having two coverings. The radius of the first layer of the first covering was 300 microns, that of the second layer of the first covering, 400 micrometers and that of the second covering, 0.9 mm. Temperature dependency of Young's modulus of the resins D and E are shown in Fig. 5. young's modulus of the resins D and E was larger than 0.5 kg/cm² at 23°C and that of the resin E at -30°C was in excess of ten times that at 23°C.

Attenuation of light transmission of the covered optical fibers was measured in the same manner as in Example 1. The results are shown in Table 2.

Table 2

| No. | Resin of 1st covering | | Attenuation (dB/km) | | | |
|-----|------|------|-------|-------|-------|-------|
| | 1st layer | 2nd layer | Under bundled condition | | Under condition with lateral pressure | |
| | | | 23°C | -30°C | 23°C | -30°C |
| 4 | A | D | 2.27 | 2.29 | 2.60 | 2.83 |
| 5 | C | E | 2.22 | 28.7 | 2.75 | Too high to measure |
| 6 | D | A | 2.22 | 2.31 | 2.71 | 2.98 |
| 7 | E | C | 2.26 | 19.8 | 2.64 | Too high to measure |

The resins A to E are available in following trade names from each manufacturers:

Resin A: "OX 118" by Mitsui Toatsu Chemicals, Inc.

Resin B: "TN 1017" by Toray Industries, Inc.

Resin C: "RC 3450-7" by DeSoto Inc.

Resin D: "DICURECOAT 8701" by Dainippon Ink and Chemicals, Inc.

Resin E: "UVU 370F" by Sanyo Chemical Industries, Ltd.

## Claims

1. An optical fiber characterized by a first covering (2, 4, 5) surrounding the optical fiber (1) and a second covering (3) surrounding the first covering, the first covering (2, 4, 5) comprising a material the Young's modulus of which at -30°C is not greater than ten times that at 23°C.

2. An optical fiber according to claim 1, wherein the first covering (2, 4, 5) comprises an ultraviolet- or electron beam-cured resin.

3. An optical fiber according to claim 2, wherein the first covering consists of a single layer (2) made of an ultraviolet- or electron beam-cured resin having Young's modulus at 23°C of 0.5 kg/mm$^2$ or less.

4. An optical fiber according to claim 2, wherein the first covering consist of at least two layers (4, 5) of an ultraviolet- or electron beam-cured resin and at least one layer is made of a resin having Young's modulus at 23°C of 0.5 kg/mm$^2$ or less.

5. An optical fiber according to claim 1, wherein the second covering (3) comprises a thermoplastic resin.

Fig. 1

Fig. 2

Fig. 3

Fig. 4

Fig. 5